# EUROPÄISCHE PATENTSCHRIFT

(11) **EP 0 564 060 B1**
(45) Veröffentlichungstag und Bekanntmachung des Hinweises auf die Patenterteilung: **31.07.1996**
(21) Anmeldenummer: 93250087.9
(22) Anmeldetag: 19.03.1993
(51) Int. Cl.: B06B 1/00, B06B 1/04, G01N 29/24

(54) **Prüfkopf zur zerstörungsfreien Prüfung**
Sensor head for non-destructive testing
Tête pour détecteur de contrôle non-destructif

(30) Priorität: 02.04.1992 DE 4211436; 11.02.1993 DE 4304548
(43) Veröffentlichungstag der Anmeldung: 06.10.1993
(73) Patentinhaber: MANNESMANN Aktiengesellschaft, D-40027 Düsseldorf (DE)
(72) Erfinder: Arzt, Norbert, W-5010 Bergheim (DE); Haacke, Harri, W-4030 Ratingen (DE)
(74) Vertreter: Meissner, Peter E., Dipl.-Ing.

(56) Entgegenhaltungen:
- DE-A- 3 935 432
- FR-A- 2 558 261
- US-A- 4 777 824
- PATENT ABSTRACTS OF JAPAN vol. 6, no. 5 (P-097) 13. Januar 1982 & JP-A-56 132 558 (HITACHI LTD) 16. Oktober 1981
- PATENT ABSTRACTS OF JAPAN, Bd. 6, Nr. 5 (P-097) 13. Januar 1982;& JP-A-56 132 558

## Beschreibung

Die Erfindung betrifft einen Prüfkopf zur zerstörungsfreien Prüfung von relativ dazu sich bewegenden Werkstücken gemäß dem Gattungsbegriff des Hauptanspruches.

Neben den Prüfköpfen, die für die Ankopplung von Ultraschall an das zu prüfende Werkstück ein Koppelmittel, beispielsweise Wasser, benötigen, gibt es auch Prüfköpfe, die koppelmittelfrei arbeiten. Solche Prüfköpfe sind beispielsweise sogenannte EMUS-Wandler (GB-2006433), Streufluß- oder Wirbelstromsonden. Allen diesen genannten Prüfköpfen ist gemeinsam, daß die hochempfindlichen Sonden so dicht wie möglich an die Oberfläche des Werkstückes herangeführt werden müssen, da ansonsten das Meß- bzw. Echosignal zu gering wäre. Um der Forderung nach möglichst kleinem Abstand zu genügen, wird der Prüfkopf entweder unmittelbar auf die Oberfläche des zu prüfenden Werkstückes aufgesetzt oder in geringem Abstand zur Werkstückoberfläche geführt und die Sonde in dem dem Werkstück zugewandten Stirnflächenbereich des Prüfkopfes angeordnet. Damit die teuren und empfindlichen Sonden bei eventuellen Berührungen mit der Werkstückoberfläche nicht zerstört werden, ist es bekannt (GB-Z Ultrasonics 1988, Vol. 26, January, Seite 14-21), die Mantelfläche des Endenbereiches der Sonde mit einer mit einem Halteelement verbindbaren Kappe zu umfassen und die dem Werkstück zugewandte Flachseite der Sonde, auf der die Spulen bzw. das Spulensystem befestigt sind, mit einem befestigbaren Verschleißschutzelement aus Keramik abzudecken. In der in der zitierten Schrift offenbarten Vorrichtung ist die Kappe und das Verschleißschutzelement als einstückiges, eine unterschiedliche Wanddicke aufweisendes Formteil aus Keramik ausgebildet. Damit lokal auftretende Stöße nicht unmittelbar auf die spröde Keramikkappe einwirken können, ist diese außen von einem wie eine Stoßstange wirkenden Kunststoffkörper umgeben. Üblich ist es auch, die dem Werkstück zugewandte Flachseite der Sonde mit einer Keramikscheibe abzudecken (GB-20 06 433 A). Um der Forderung nach einem möglichst geringen Abstand der Spule bzw. des Spulensystems zur Werkstückoberfläche bei gleichzeitigem sicheren Schutz der Spule zu genügen, wird angestrebt, daß das die Flachseite der Spule abdeckende Verschleißschutzelement möglichst ständig im konstanten Abstand zur Werkstückoberfläche geführt wird. Bei der Prüfung von ideal runden Rohren bzw. Stäben mit mittig und gerade liegender Drehachse und bei einer einwandfreien Führung ist dies in den meisten Fällen erfüllt. Zu einer stoßartigen Belastung des Verschleißschutzelementes kommt es aber dennoch, da in der Praxis die zu prüfenden Rohre bzw. Stäbe nicht kreisrund sind und außerdem einen sogenannten Schlag, d. h. eine Abweichung von der idealen Achslage aufweisen. Dies gilt insbesondere für die Endenbereiche von Rohren bzw. Stäben. Dies hat zur Folge, daß bei der Prüfung die zu prüfenden Rohre bzw. Stäbe aus der idealen Prüfmittellageauswandern und dann das Verschleißschutzelement stoßartig berühren. Die bereits erwähnte Keramikscheibe bzw. das Keramikformteil sind zwar wegen ihrer großen Härte sehr verschleißfest, aber auch spröde, so daß es bei schlagartiger Beanspruchung zum Bersten der Scheibe bzw. des Formteiles kommen kann. Bei diesem Bersten werden auch in den meisten Fällen die teuren und empfindlichen Spulen bzw. Spulensysteme zerstört.

Ein weiteres Problem ist die Art der Befestigung des Verschleißschutzelementes an der Sonde. Beispielsweise ist es bei der bereits erwähnten Keramikscheibe üblich, winklig geformte Niederhalter aus Blech zu verwenden, die im Kantenbereich der Keramikscheiben zur Anlage kommen. Nachteilig dabei ist, daß diese Niederhalter über der Oberkante der Keramikscheiben hervorstehen und durch Berührung mit dem zu prüfenden Werkstück abgeschert werden. Dabei kann es vorkommen, daß beim Abscheren auch Teile der Keramikscheibe abgerissen werden. Alternativ wird die Keramikscheibe auch unmittelbar auf der Flachseite der Sonden aufgeklebt. Aber auch in diesem Fall wird durch stoßartige Berührung mit dem Werkstück die Keramikscheibe zuerst punktuell und dann flächenhaft zerstört. Damit eine neue Keramikscheibe aufgelegt werden kann, müssen die festsitzenden Reststücke der Keramikscheibe entfernt werden. Dabei wird meist der Spulenbereich der Sonde, der unmittelbar darunter liegt, ebenfalls zerstört. Statt einer Scheibe aus Keramik werden auch verschiedene Kunststoffe oder Laminate als Verschleißschutzelement verwendet. Was die Befestigung dieser Elemente an der Sonde betrifft, so ist die Problematik die gleiche, wie schon zuvor ausgeführt.

Aufgabe der Erfindung ist es, für einen Prüfkopf zur zerstörungsfreien Prüfung von relativ dazu sich bewegenden Werkstücken, dessen nahe an der Stirnfläche angeordnete Spulen bzw. Spulensysteme sicher geschützt werden sollen, einen Sondenschutz anzugeben, der in einfacher Weise befestigt und ausgewechselt werden kann, so daß die Stör- und Stillstandszeiten minimiert werden und der an unterschiedliche Querschnittsformen des Sondenkörpers leicht anpaßbar ist.

Diese Aufgabe wird durch die im kennzeichnenden Teil des Hauptanspruches angegebenen Merkmale gelöst. Vorteilhafte Weiterbildungen ergeben dich aus den Unteransprüchen.

Zur Lösung der in der Beschreibungseinleitung ausführlich erläuterten Problematik beim bekannten Stand der Technik wird erfindungsgemäß eine aus einem nichtmagnetischen metallischen Werkstoff hergestellte und einen Ausschnittsbereich aufweisende Kappe verwendet. Vorzugsweise ist der Werkstoff ein austenitischer 18-8 CrNi-Stahl. Die Kappe ist mit dem als Trägerplatte ausgebildeten Halteelement verbindbar. Die Hauptlast des Verschleißschutzes übernehmen zwei an sich bekannte Gleitsteine aus z.B. Hartmetall, die auf der dem Werkstück zugewandten Fläche der Kappe befestigt sind. Die Dicke dieser Gleitsteine liegt in einem Bereich zwischen 0,2-1,0 mm, vorzugsweise bei 0,5 mm. In den Ausschnittsbereich der Kappe ragt der Endenbereich der aus einem Mehrfachschwinger oder aus aneinanderliegenden Einzelschwingern bestehenden Sonde hinein. Die Einzelschwingeranordnung hat den Vorteil, daß bei Ausfall unabhängig voneinander die einzelnen Schwinger ausgewechselt werden können. Damit, wie zuvor schon geschildert, auch bei starker Auswanderung von Rohren oder Stäben aus der idealen Prüfmittellage die teuren und empfindlichen Spulen bzw. Spulensysteme nicht zerstört werden, wird die dem Werkstück zugewandte Flachseite der Sonde mit einem aus einem faserverstärkten laminierten Werkstoff hergestellten Verschleißschutzelement, das als separates Formteil ausgebildet ist, abgedeckt. Damit das Formteil im Ausschnittsbereich der Kappe fixiert werden kann, sind am Verschleißschutzelement Falzbereiche angeformt, die einen Winkel zu dem die Flachseite der Sonde abdeckenden Bereich aufweisen. Die Forderung nach einem möglichst geringen Abstand der Spule zur Werkstückoberfläche wird in der Weise erfüllt, daß die dem Werkstück zugewandte Oberfläche des Formteils bündig mit der dem Werkstück zugewandten Fläche der Kappe liegt. Die Dicke des Formteiles liegt in einem Bereich zwischen 0,2-1,0 mm, vorzugsweise 0,5 mm.

Die Falzbereiche weisen einen Winkel, üblicherweise 90 Grad zu dem Bereich auf, der die Flachseite der Sonde abdeckt. Mit dieser Ausbildung des Elementes wird den Anforderungen nach einer leichten Austauschbarkeit in vorteilhafter Weise Rechnung getragen. Außerdem kann das Formteil wegen seiner geringen Querschnittsdicke und des bildsamen Werkstoffes in einfacher Weise unterschiedlichen Querschnittsformen von Sondenkörpern angepaßt werden. Der empfindliche Spulenbereich der Sonde wird auch bei stoßartiger Berührung durch das Verschleißschutzelement geschützt und durch den bündigen Abschluß bei Wegfall der üblichen Niederhalter kann das Spulensystem so dicht wie möglich an die Werkstückoberfläche gelegt werden. Dies bedeutet einen entsprechenden Gewinn an verwertbarer Signalhöhe, was der Prüfgenauigkeit zugute kommt. Das Klemmsystem ermöglicht ein leichtes Auswechseln eines beschädigten Verschleißschutzelementes, da keine mit Kleber festsitzende Reststücke entfernt werden müssen. Die Klemmung kann einmal durch die Schenkel des U-förmig ausgebildeten Formteiles erfolgen, wenn man die Querschnittsdicke der Schenkel in Richtung der Werkstückoberfläche abnehmen läßt. Den gleichen Effekt kann man auch dadurch erreichen, wenn man die parallel zur Längsrichtung liegenden Seitenflächen des Sondenendenbereiches mit einer Schräge versieht. Da sowohl die Herstellung schrägverlaufender Seitenflächen des Sondenkörpers als auch die unterschiedliche Querschnittsdicke aufweisenden Schenkel des Formteiles aufwendig ist, wird weiterbildend vorgeschlagen, das Formteil mit einer hutförmigen Querschnittskontur zu versehen. Die Klemmung erfolgt dann in einfacher Weise zwischen der Unterseite des Ausschnittbereiches der Kappe und einem treppenartigen Absatz des Sondenkörpers.

Die Austauschmöglichkeit kann geändert werden, indem man das Formteil so groß gestaltet, daß es den Querschnitt der Kappe umfassen kann und die Schenkel des Formteiles an dieser unmittelbar befestigt wird. Ergänzend muß darauf hingewiesen werden, daß in diesem Fall der vom Formteil abgedeckte Bereich der dem Werkstück zugewandten Fläche der Kappe eine Vertiefung aufweist, so daß die jeweilige Oberkante von Formteil und Kappe wieder bündig liegt. Eine weitere Alternative ergibt sich in der Weise, das Formteil, wie bereits erwähnt, mit einer hutförmigen Querschnittskontur zu versehen und die krempenartigen Schenkel direkt auf der Trägerplatte zu befestigen. In den beiden letztgenannten Fällen ist zum Auswechseln eines beschädigten Formteiles ein Abschrauben der Kappe nicht erforderlich. Dies wirkt sich wiederum günstig für die angestrebte Minimierung der Stillstandszeiten aus. Damit das Formteil im Befestigungsbereich unter Belastung nicht ausreißen kann, wird außerdem vorgeschlagen, in diesem Bereich eine Verstärkerleiste, beispielsweise aus Blech anzuordnen. Die Vorteile eines nachgiebigen Verschleißschutzelementes, das auch bei stoßartiger Belastung nicht zum Bersten neigt und die geringe Verschleißrate von Keramikscheiben kann man in der Weise kombinieren, wenn man die dem Werkstück zugewandte Verschleißseite des Formteils mit einem mittels eines Haftvermittlers aufgebrachten verschleißfesten Material beschichtet. Dieses Material ist vorzugsweise ein Pulver aus Al₂O₃. Da die Schichtdicke nur sehr gering ist, wird bei praktisch unverändertem Abstand von Spule zu Werkstückoberfläche die Verschleißfestigkeit des Formteiles erhöht ohne Einbuße an die Nachgiebigkeit und die Formgebung des Verschleißschutzelementes.

In der Zeichnung wird anhand einiger Ausführungsbeispiele das erfindungsgemäße Verschleißschutzelement näher erläutert.

Es zeigen:
- Figur 1: einen Querschnitt durch einen Prüfkopf mit einem erfindungsgemäßen Verschleißschutzelement
- Figur 2: eine Explosionszeichnung gemäß der Darstellung in Fig. 1
- Figur 3: wie Fig. 1, jedoch eine andere Ausführungsform des Verschleißschutzelementes
- Figur 4: wie Fig. 1, jedoch mit zwei unterschiedlich ausgebildeten Ausführungsformen des Verschleißschutzelementes (linke Hälfte, rechte Hälfte)

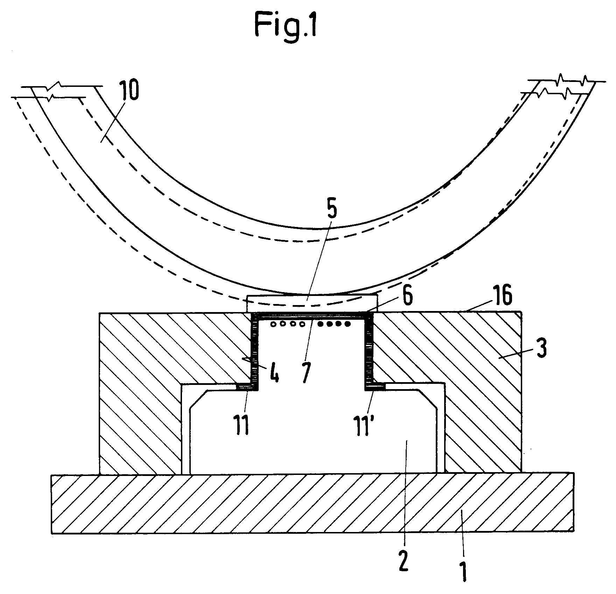

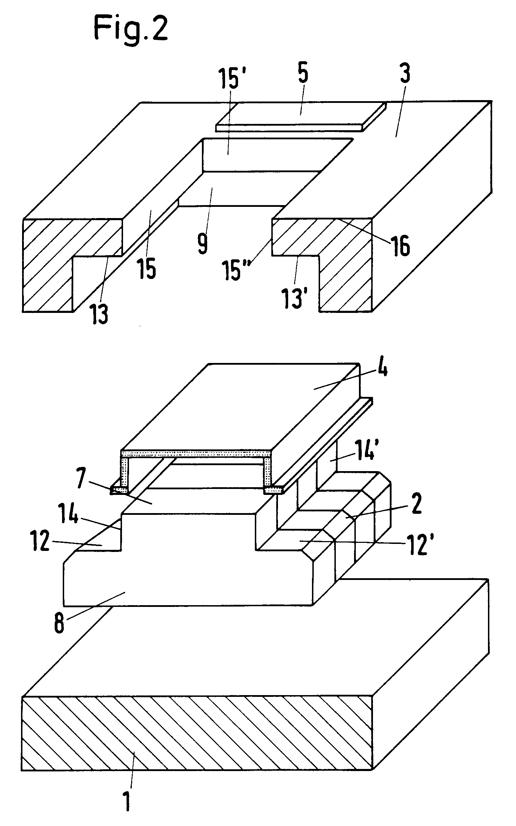

Figur 1 zeigt im Querschnitt und Figur 2 in einer Explosionsdarstellung die Anordnung des erfindungsgemäßen Verschleißschutzelementes in einem Prüfkopf. Der Prüfkopf besteht aus einer Sondenträgerplatte 1, auf der die einzelnen aneinanderliegenden Sondenkörper 2 befestigt sind. Gemäß Figur 2 sind in diesem Beispiel vier Sondenkörper zu einem sogenannten Prüflineal zusammengefaßt. Alternativ könnte die Sonde auch als ein einstückiger Mehrfachschwinger ausgebildet sein. Skizzenhaft angedeutet ist in Fig. 1 die Lage der Spule bzw. des Spulensystems 6 dicht unterhalb der dem Werkstück 10 zugewandten Flachseite des Sondenkörpers 2. Damit der Sondenkörper 2 und insbesondere das empfindliche Spulensystem 6 bei Berührung mit dem Werkstück 10 nicht beschädigt oder sogar zerstört wird, ist der Endenbereich 8 des Sondenkörpers 2 von einer einen Ausschnittsbereich 9 aufweisenden Kappe 3 umschlossen. Die dem zu prüfenden Werkstück 10 zugewandte Flachseite 7 des Sondenkörpers 2 wird durch das erfindungsgemäß als Formteil 4 ausgebildete Verschleißschutzelement abgedeckt. In diesem Beispiel ist die Querschnittskontur des Formteils 4 hutförmig und die beiden krempenartigen Schenkel 11,11' werden zwischen einem treppenartigen Absatz 12,12' des Sondenkörpers 2 und der Unterseite 13,13' des Ausschnittbereiches 9 der Kappe 3 geklemmt. Die Höhe der parallel zur Längsachse verlaufenden Seitenfläche 14,14' des Sondenkörpers 2 wird der Höhe der Innenflächen 15,15',15''' des Ausschnittbereiches 9 der Kappe 3 so gewählt, daß der die Flachseite 7 des Sondenkörpers 2 abdeckende Bereich des Formteiles 4 bündig mit der Oberkante 16 der Kappe 3 abschließt. Der auf der Kappe 3 angeordnete Gleitstein 5, der üblicherweise aus Hartmetall hergestellt wird, kommt während der Prüfung ständig mit der Werkstückoberfläche zur Anlage und übernimmt den wesentlichen Anteil des Verschleißkontaktes. Zur Verbesserung der Verschleißbeständigkeit des Formteiles 4 wird die dem Werkstück 10 zugewandte Oberfläche des Formteiles 4 mit einem mittels eines Haftvermittlers aufgebrachten verschleißfesten Material, z.B. Al₂O₃-Pulver, beschichtet.

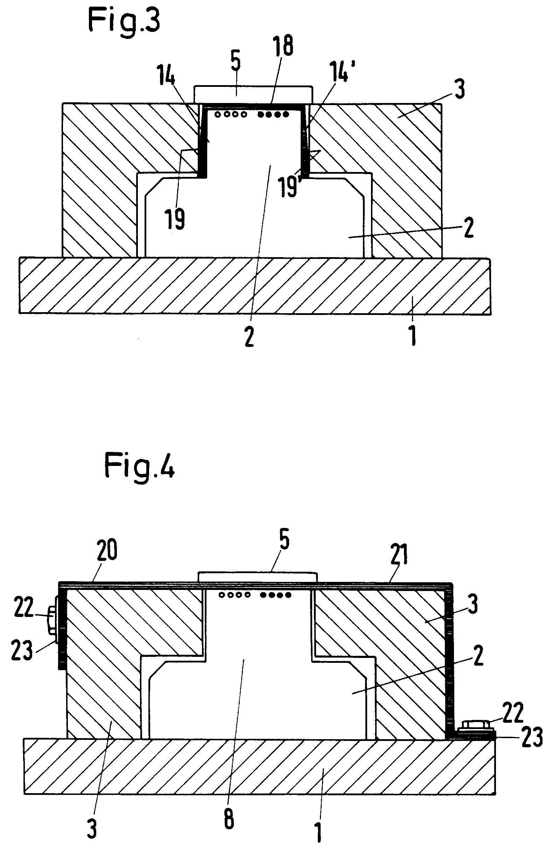

Figur 3 zeigt im gleichen Querschnitt wie in Figur 1 eine andere Ausführungsform des Formteiles 18. Dabei wurden für gleiche Teile die gleichen Bezugszeichen wie in Fig. 1 verwendet. Im Unterschied zu Figur 1 weist das Formteil 18 eine U-förmige Querschnittskontur auf, wobei die Querschnittsdicke der beiden Schenkel 19,19' in Richtung des Sondenkörpers 2 zunimmt. Beim Überstülpen der Kappe 3 wird der dickere Bereich der Schenkel 19,19' geklemmt, so daß das Formteil 18 fest auf dem Endenbereich 8 des Sondenkörpers 2 fixiert ist. Eine leichte Quetschung im Klemmbereich kann in Kauf genommen werden, da dieses Formteil ein Verschleißelement ist und nach entsprechender Abnutzung weggeworfen wird. Diese Art der Klemmung kann man auch dadurch erreichen, daß man die Seitenfläche 14,14' des Endenbereiches 8 des Sondenkörpers 2 mit einer Schräge versieht.

Eine Abwandlung der Anordnung des erfindungsgemäßen Formteiles ist in Figur 4 dargestellt, und zwar unterschiedlich für die linke und die rechte Hälfte der Darstellung. In diesem Beispiel weist die linke Hälfte des Formteils 20 eine U-förmige Querschnittskontur und die rechte Hälfte des Formteils 21 eine hutförmige Querschnittskontur auf, wobei im Unterschied zu den Ausbildungen gemäß den Figuren 1 und 3 das Formteil den Querschnitt der Kappe 3 umfaßt. Die Formteile 20 bzw. 21 werden in diesen beiden Fällen nicht geklemmt, sondern beispielsweise durch Schrauben 22 fixiert. Damit der faserverstärkte Werkstoff der Formteile 20,21 im Befestigungsbereich nicht ausreißen kann, wird eine Verstärkerleiste 23, beispielsweise aus Blech angeordnet. Der Vorteil dieser Anordnung ist darin zu sehen, daß beim Auswechseln des Formteiles 20 bzw. 21 die Kappe 3 nicht abgeschraubt werden braucht, so daß die Stillstandszeit dadurch weiter vermindert wird. Der Nachteil der Herstellung eines größeren Formteiles wegen der größeren Querschnittserstreckung wird dabei in Kauf genommen.

## Patentansprüche

1. Prüfkopf zur zerstörungsfreien Prüfung von relativ dazu sich bewegenden Werkstücken (10), mit mindestens einer auf einer Trägerplatte (1) angeordneten Sonde (2), auf deren dem Werkstück (10) zugewandten Stirnseite eine Spule bzw. ein Spulensystem (6) befestigt und die Mantelfläche des Endenbereiches der Sonde (2) von einer mit der Trägerplatte (1) verbindbaren, aus einem nichtmagnetischen metallischen Werkstoff bestehenden und einen Ausschnittbereich aufweisenden Kappe (3) umgeben ist und auf der dem Werkstück (10) zugewandten Fläche der Kappe (3) zwei Gleitsteine (5) befestigt sind und in den Ausschnittbereich der Kappe (3) der Endenbereich der Sonde (2) hineinragt und die dem Werkstück (10) zugewandte Stirnseite der Sonde (2) mit einem befestigbaren dünnwandigen Verschleißschutzelement abgedeckt ist, das für die Fixierung angeformte Falzbereiche (11, 11', 19, 19') aufweist,
dadurch gekennzeichnet,
daß das aus einem faserverstärkten laminierten Werkstoff hergestellte Verschleißschutzelement als separates Formteil (4, 18, 20, 21) ausgebildet ist, dessen dem Werkstück (10) zugewandte Flachseite genau bündig liegt mit der dem Werkstück (10) zugewandten Oberfläche der Kappe (3).

2. Prüfkopf nach Anspruch 1,
dadurch gekennzeichnet,
daß das Formteil (18) eine den Sondenendenbereich (8) umfassende U-förmige Querschnittskontur aufweist und die beiden Falzbereiche (19, 19') eine in Richtung zur Werkstückoberfläche (10) abnehmende Dicke aufweisen und zwischen der inneren Mantelfläche des Ausschnittbereiches (9) der Kappe (3) und den parallel zur Längsachse der Sonde liegenden Seitenflächen (14,14') des Sondenendenbereiches (8) zur Anlage kommen.

3. Prüfkopf nach Anspruch 2,
dadurch gekennzeichnet,
daß die parallel zur Längsseite liegenden Seitenflächen (14,14') des Endenbereiches (8) der Sonde (2) eine in Richtung zur Werkstückoberfläche (10) abnehmende Schräge aufweisen.

4. Prüfkopf nach Anspruch1,
dadurch gekennzeichnet,
daß das Formteil (4) eine den Sondenendenbereich (8) umfassende hutförmige Querschnittskontur aufweist und die beiden krempenartigen Falzbereiche (11,11') zwischen der Unterseite (13,13') des Ausschnittbereiches (9) der Kappe (3) und einem treppenartigen Absatz (12,12') des Sondenkörpers (2) zur Anlage kommen.

5. Prüfkopf nach Anspruch 1,
dadurch gekennzeichnet,
daß das Formteil (20) eine die Querschnittskontur der Kappe (3) umfassende U-förmige Querschnittskontur aufweist und die Falzbereiche des Formteils (20) an den äußeren Seitenflächen der Kappe (3) befestigt sind.

6. Prüfkopf nach Anspruch 1,
dadurch gekennzeichnet,
daß das Formteil (21) eine die Querschnittskontur der Kappe (3) umfassende hutförmige Querschnittskontur aufweist und die krempenartigen Falzbereiche an der Trägerplatte (1) befestigt sind.

## Claims

1. A test head for the non-destructive testing of workpieces (10) which move relative thereto, with at least one probe (2) arranged on a supporting plate (1), to the end of which probe which faces the workpiece (10) a coil or a coil system (6) is attached, and the generated surface of the end region of the probe (2) is surrounded by a cap (3) which can be connected to the supporting plate (1) and consists of a non-magnetic metallic material and has a cutout region, and two sliders (5) are attached to the face of the cap (3) facing the workpiece (10) and the end region of the probe (2) projects into the cutout region of the cap (3) and the end face of the probe (2) which faces the workpiece (10) is covered with an attachable, thin-walled anti-wear element which has fold regions (11, 11', 19, 19') formed on for fixing,
characterised in that
the anti-wear element made of a fibre-reinforced laminated material is designed as a separate shaped part (4, 18, 20, 21), the flat side of which which faces the workpiece (10) is exactly flush with the face of the cap (3) which faces the workpiece (10).

2. A test head according to Claim 1, characterised in that the shaped part (18) has a U-shaped cross-sectional contour comprising the end region (8) of the probe, and the two fold regions (19, 19') have a thickness which decreases towards the surface of the workpiece (10) and come to rest between the inner generated surface of the cutout region (9) of the cap (3) and the side faces (14, 14') of the end region of the probe (8) which are located parallel to the longitudinal axis of the probe.

3. A test head according to Claim 2, characterised in that the side faces (14, 14') of the end region (8) of the probe (2) located parallel to the long side have an inclination which decreases towards the surface of the workpiece (10).

4. A test head according to Claim 1, characterised in that the shaped part (4) has a cap-shaped cross-sectional contour comprising the end region (8) of the probe and the two flange-like fold regions (11, 11') come to rest between the underside (13, 13') of the cutout region (9) of the cap (3) and a stair-like shoulder (12, 12') of the probe body (2).

5. A test head according to Claim 1, characterised in that the shaped part (20) has a U-shaped cross-sectional contour surrounding the cross-sectional contour of the cap (3) and the fold regions of the shaped part (20) are attached to the outer side faces of the cap (3).

6. A test head according to Claim 1, characterised in that the shaped part (21) has a cap-shaped cross-sectional contour surrounding the cross-sectional contour of the cap (3) and the flange-like fold regions are attached to the supporting plate (1).

## Revendications

1. Tête de contrôle pour le contrôle sans destruction de pièces (10) se déplaçant relativement à celle-ci, comportant au moins une sonde (2) agencée sur une plaque porteuse (1), sur la face frontale de laquelle en regard de la pièce (10) est fixé une bobine ou un système à bobine (6), et la face d'enveloppe de la zone d'extrémité de la sonde (2) étant entourée d'une calotte (3) pouvant être reliée à la plaque porteuse (1), réalisée en un matériau métallique non magnétique et présentant une zone découpée, et deux coulisseaux (5) étant fixés sur la face de la calotte (3) en regard de la pièce (10), et la zone d'extrémité de la sonde (2) faisant saillie dans la zone découpée de la calotte (3), et la face frontale de la sonde (2) en regard de la pièce (10) étant recouverte d'un élément de protection contre l'usure pouvant être fixé, à paroi mince, et présentant des zones de pli (11, 11', 19, 19') formées pour la fixation,
caractérisée en ce que l'élément de protection contre l'usure formé en un matériau laminé et renforcé par des fibres est réalisé comme pièce préformée séparée (4, 18, 20, 21), dont la face plane en regard de la pièce (10) est située exactement à fleur de la surface de la calotte (3) en regard de la pièce (10).

2. Tête de contrôle selon la revendication 1,
caractérisée en ce que la pièce préformée (18) présente un contour de section transversale en forme de U entourant la zone d'extrémité de sonde (8) et les deux zones de pli (19, 19') présentent une épaisseur décroissant en direction de la surface de la pièce (10) et viennent en appui entre la face d'enveloppe interne de la zone découpée (9) de la calotte (3) et les faces frontales (14, 14') orientées parallèlement à l'axe longitudinal de la sonde, de la zone d'extrémité de sonde (8).

3. Tête de contrôle selon la revendication 2,
caractérisée en ce que les faces frontales (14, 14') de la zone d'extrémité (8) de la sonde (2), orientées parallèlement à la face longitudinale, présentent un biseau décroissant en direction de la surface de la pièce (10).

4. Tête de contrôle selon la revendication 1,
caractérisée en ce que la pièce préformée (4) présente un contour de section transversale en forme de chapeau entourant la zone d'extrémité de sonde (8), et les deux zones de pli (11, 11') en forme de rebord viennent en appui entre la face inférieure (13, 13') de la zone découpée (9) de la calotte (3) et une saillie (12, 12') en forme d'escalier du corps de sonde (2).

5. Tête de contrôle selon la revendication 1,
caractérisée en ce que la pièce préformée (20) présente un contour de section transversale en forme de U entourant le contour de section transversale de la calotte (3), et les zones de pli de la pièce préformée (20) sont fixées sur les faces frontales externes de la calotte (3).

6. Tête de contrôle selon la revendication 1,
caractérisée en ce que la pièce préformée (21) présente un contour de section transversale en forme de chapeau entourant le contour de section transversale de la calotte (3) et les zones de pli en forme de rebord sont fixées sur la plaque porteuse (1).
